# EUROPEAN PATENT APPLICATION

(11) **EP 4 636 977 A1**
(43) Date of publication of application: **22.10.2025**
(21) Application number: 24170368.5
(22) Date of filing: 15.04.2024
(51) Int. Cl.: H02J 3/36, H02M 7/757

(54) **IMPROVEMENTS RELATING TO RIGID BIPOLE POWER TRANSMISSION NETWORKS**

(71) Applicant: GE Vernova Technology GmbH, 5400 Baden (CH)
(72) Inventor: JASIM, Omar, Stafford, ST16 1WS (GB); KUMAR, AMIT, Stafford, ST16 1WS (GB); CHANDRANI, Shreya Suresh, 500081 Hyderabad (IN)
(74) Representative: Openshaw & Co.

(57) **Abstract**

There is provided a method (800) of energising electrical poles of a rigid bipole power transmission network, the rigid bipole power transmission network comprising a first pair of converters connected to a second pair of converters via first and second electrical poles, and further comprising a ground return path. The method (800) comprises determining (810) one or more parameters associated with either of the first or second pair of converters, wherein the one or more parameters indicate a difference in energy between the first and second electrical poles. The method (800) further comprises controlling (820), based on the one or more parameters, at least one converter of the associated first or second pair of converters to regulate the difference in energy between the first and second electrical poles such that a ground current flowing in the ground return path is below a predetermined threshold value.

## Description

### Field

The subject matter herein relates generally to the field of power transmission networks and more specifically to rigid bipole power transmission networks.

### Introduction

In high voltage direct current (HVDC) power transmission networks, alternating current (AC) power is typically converted to direct current (DC) power for transmission via overhead lines, under-sea cables and/or underground cables. This conversion removes the need to compensate for the AC reactive/capacitive load effects imposed by the power transmission medium, i.e. the transmission line or cable, and reduces the cost per kilometre of the lines and/or cables, and thus becomes cost-effective when power needs to be transmitted over a long distance. DC power can also be transmitted directly from offshore wind parks to onshore AC power transmission networks, for instance.

The conversion between DC power and AC power is utilised where it is necessary to interconnect DC and AC networks. In any such power transmission network, power conversion means also known as converters (i.e., power converters in converter stations) are required at each interface between AC and DC power to effect the required conversion from AC to DC or from DC to AC.

The choice of the most suitable HVDC power transmission network or scheme depends on the particular application and scheme features. Examples of power transmission networks include monopole power transmission networks and bipole power transmission networks.

Generally, a bipole DC power transmission network comprises two DC electrical poles (which are referred to as a first/positive pole and a second/negative pole) interconnecting respective converters (i.e., onshore and offshore converters in onshore and offshore converter stations). These DC electrical poles may be considered as separate circuits that can be energised independently or in some synchronised manner. More specifically, when the bipole DC power transmission network comprises a neutral return path (such as a dedicated metallic return conductor (DMR)), the two DC electrical poles may be energised independently. This is because any difference in DC current between the two DC electrical poles can flow through the neutral return path.

However, in rigid DC power transmission networks either or both converter stations are grounded. An imbalance between the two DC electrical poles will resultantly flow to ground which can give rise to various issues such as electromagnetic interference (EMI) inducing unwanted currents in nearby conductors, potential differences across different electrical points that may lead to equipment damage or fires, and accelerated corrosion in grounding conductors, structures or connections.

### Summary

When a rigid bipole HVDC system is energised, it is required to ensure that the two converters in each station of the HVDC system are energised in a coordinated manner so that their DC voltage outputs are nearly equal. If this were not to occur, an energy imbalance would arise between the converters and cause a current difference between the DC electrical poles to flow to ground. One way of coordinating energisation is to simultaneously run an energisation sequence for both of the electrical poles. This would involve charging both of the converters together. However, there would always be differences between the energy levels and/or the DC voltage outputs of the converters owing to reasons including but not limited to differences in closing times of HV equipment, differences in tolerances of HV equipment, and differences in the timing/control of the submodules of power converters (i.e., via the switching control algorithms).

In order to overcome these issues, the inventors have realised that in order to match the DC voltage outputs (i.e., match the energy levels/balance the energy levels of the electrical poles) of the converters of the electrical poles, the energy levels of their respective converters can be controlled during energisation. More specifically the inventors have realised that converter energization can be balanced.

This is achieved by providing a control logic for the converters of both electrical poles in a converter station that is initiated when the converters are deblocked. The contribution of the control logic tends to be to modulate/modify the DC voltage output by the converters (the energy) to one or both poles to achieve synchronous energisation of the electrical poles.

More specifically, the control logic tends to change or modify the charging of the converter valve capacitors (i.e., the rate of rise of energy of the converters) and controls the switching in and out of circuit of the converter submodules comprising the valve capacitors, which accordingly influences the DC voltage at the DC point of connection of each electrical pole to the converter/s. Hence, the DC currents on the electrical poles can be balanced to ensure current flowing to ground is maintained below a predefined limit, which ideally is close to zero. The DC voltage is determined by the level of energy and the number of modules switched in within a power converter. Accordingly, an aim is to control the DC voltage output from both converters to the two electrical poles to be as close as possible in order to drive near-zero current flowing to ground. Hence, the DC currents on the electrical poles can be balanced to ensure current flowing to ground (the ground current) is maintained below a predefined limit or kept close to zero.

The disclosure herein tends to provide a method to balance the current/energy between two pole converters during the energisation of a rigid bipole scheme by ensuring the difference between the DC voltage at each pole is as low as possible.

The disclosure herein tends to provide for the coordinated energisation of both electrical poles in a bipolar HVDC transmission system that ensures that ground current is controlled to predefined limits (i.e., close to zero). Furthermore, the disclosure herein tends to allow for faster energisation of the bipolar HVDC system while ensuring that the ground current remains close to zero or does not exceed the predefined limits.

According to a first aspect, there is provided a method of energising electrical poles of a rigid bipole power transmission network, the rigid bipole power transmission network comprising a first pair of converters connected to a second pair of converters via first and second electrical poles, and further comprising a ground return path, the method comprising: determining one or more parameters associated with either of the first or second pair of converters, wherein the one or more parameters indicate a difference in energy between the first and second electrical poles; and controlling, based on the one or more parameters, at least one converter of the associated first or second pair of converters to regulate the difference in energy between the first and second electrical poles such that a ground current flowing in the ground return path is below a predetermined threshold value.

The method may be a computer-implemented method. As referred to herein, the first pair of converters may be considered as representing a first converter station. The second pair of converters may be considered as representing a second converter station. In a rigid bipole power transmission network, one or more of the converter stations (i.e., the converter pairs) is grounded. The converters may be AC:DC converters. The electrical poles may be DC electrical poles. The ground return path may therefore comprise a grounding of the first pair of converters, the second pair of converters, or both. The ground return path may include a grounding resistor, a surge arrestor, or some other grounding means.

The first pair of converters are connected to the second pair of converters via first and second electrical poles. It will be generally understood that in a bipole power transmission network, one converter of the first pair of converters will be connected to one of the converters of the second pair of converters via the first electrical pole. The other converter in the first pair of converters will be connected to the other converter in the second pair of converters via the second electrical pole. It will also be generally understood that the term 'converter' includes power converters such as AC to DC converters. The difference in energy of the electrical poles may be a difference in electrical current or power, for example, which is controlled by the power converters.

As referred to herein, the determining the one or more parameters may comprise measuring the one or more parameters, using for instance a current measuring means, or may comprise calculating a parameter based on one or more measured parameters.

Furthermore, it will be generally understood that the power transmission network may be referred to as a power transmission system and may comprise a high voltage direct current (HVDC) power transmission network/system.

In some embodiments, the step of controlling, based on the one or more parameters, the at least one converter, comprises: modifying, based on the one or more parameters, a rate of rise of energy of the converters (i.e., the energisation rate or charging speed of the converter valve capacitors), which accordingly influence a DC voltage output by the at least one converter to the respective electrical pole. Thus, the DC voltage output is determined by the level of energy of the submodules and the number of submodules switched in within a power converter.

A rigid bipole power transmission network can be generalised as comprising two electrical circuits. A first electrical circuit includes one of the converters of the first pair of converters, the first electrical pole, and one of the converters of the second pair of converters (connected to the first electrical pole). A second electrical circuit includes the other of the converters of the first pair of converters, the second electrical pole, and the other of the converters of the second pair of converters (connected to the second electrical pole). By modifying the energisation rate of the converters, the charging speed of the first electrical circuit and/or the second electrical circuit is being modified. Hence the first electrical circuit can be charged quicker than the second electrical circuit, or vice versa.

Modifying the energisation rate of the converters results in a change in the DC voltage output by the converters onto the first and second electrical poles. Consequently, the power/current on the electrical poles can be adjusted. This allows for an imbalance in current, that would normally flow as a ground current, to be regulated below the predetermined threshold value. Put differently, in response to an energy imbalance between the first and second electrical poles, the DC voltage output to the first electrical pole and second electrical pole circuits can be modified, to regulate the ground current.

More specifically, it is not only the energy of the submodules of a power converter being charged that determines the DC output voltage. It is also the control of the switching algorithm which is controlling this charging mechanism and at the same time allowing more or less submodules to be switched into circuit or out of circuit. As referred to herein, a converter 'energisation' determines the DC voltage level which is inherently dependent on the energy level in the modules.

In some embodiments, the step of modifying, based on the one or more parameters, the DC voltage output by the at least one converter, comprises: determining a trimming signal based on the one or more parameters; and generating, based at least in part on the trimming signal, reference voltages for valves of the at least one converter of the associated first or second pair of converters.

Power converters may generate reference voltages for valves based on demand values for electrical current, wherein the demand values for electrical current are determined using conventional energy balancing control logic known in the art. For instance, conventional MMC energy balancing control logic and constant current/voltage control logic. A valve control logic uses these demand values to generate reference voltage for the valves. The trimming signal may be used to augment this conventional valve control logic to generate the modified reference voltage for the valves. In this regard, the trimming signal may be applied to either or both of the converters in the associated converter pair. The trimming signal adjusts the DC output voltage by adjusting the reference voltages for the valves of the converters.

In some embodiments, the step of generating, based at least in part on the trimming signal, reference voltages for valves of the at least one converter, comprises: modifying a demand value for electrical current of the at least one converter, based on the trimming signal, to generate a modified demand value for electrical current; and generating the reference voltages based on the modified demand values for electrical current.

The valve voltage references for the converters are generated based on the modified current demand values. The valve voltage references are used for controlling the charging/energization of the converters in accordance with the trimming signal, so as to ensure that the current flowing through ground (the ground current) is maintained below the predetermined threshold/limit or is kept close to zero.

Some embodiments further comprise limiting the trimming signal to a predetermined limit value.

By limiting the trimming signal to the predetermined limit value, the amount of trimming or the effect of the trimming signal on the energisation rate of the converters can be bounded.

In some embodiments, the one or more parameters comprises one or more parameters selected from the list of parameters consisting of: the ground current; a first current of the first electrical pole; a second current of the second electrical pole; and a difference between the first current and the second current.

The ground current may be the current flowing through a grounding resistor or a surge arrestor in the ground return path. The first current may be an electrical current measured at or proximal the first pair of converters or the second pair of converters. Similarly, the second current may be an electrical current measured at or proximal the first pair of converters or second pair of converters. In some embodiments, the first pair of converters are onshore converters and the second pair of converters are offshore converters. Hence the first current and second current may be referred to as onshore or offshore currents dependent on whether they are measured at the onshore or offshore converters.

In some embodiments, the predetermined threshold value is less than or equal to 5 Amperes, more preferably substantially zero.

The amount of ground current that during normal operation is allowed to flow to the ground return path, may vary depending upon the particular power transmission network or scheme. However, an allowance for 5A of ground current flow is typically permitted. It is preferable, however, to minimise ground currents as much as possible, towards substantially zero.

In some embodiments, the converters of the first pair and second pair of converters comprise voltage-source converters (VSC), more preferably multilevel modular converters (MMC).

Conventional valve control logic tends to be able to be modified using the methods described herein to allow for the differential energy control between power converters in a pair of power converters, to control the energy of the electrical poles and minimise ground return path currents.

In some embodiments, the first pair of converters are on-shore converters and the second pair of converters are off-shore converters.

The methods described herein are particularly applicable to power transmission networks connecting onshore networks to offshore networks. One example includes the connection of offshore windfarms to onshore AC loads (i.e., grids).

In some embodiments, the bipole power transmission network is a high voltage direct current (HVDC) bipole power transmission network.

The methods described herein are particularly applicable to HVDC bipole power transmission networks wherein the problems hereinbefore described tend to exist.

According to a second aspect, there is provided a controller for energising electrical poles of a rigid bipole power transmission network, the rigid bipole power transmission network comprising a first pair of converters connected to a second pair of converters via first and second electrical poles, and further comprising a ground return path, the controller comprising: a memory; and at least one processor; wherein the memory comprises computer-readable instructions which when executed by the at least one processor cause the controller to: measure one or more parameters associated with either of the first or second pair of converters, wherein the one or more parameters indicate a difference in energy between the first and second electrical poles; and control, based on the one or more parameters, at least one converter of the associated first or second pair of converters to regulate the difference in energy between the first and second electrical poles such that a ground current flowing to the ground return path is below a predetermined threshold value.

The controller may comprise computer-readable instructions, which when executed by the processor, cause the controller to perform the method/s of the first aspect. It will be appreciated that the embodiments, technical advantages and benefits of the first aspect apply equally to the controller of the second aspect.

In a third aspect, there is provided a rigid bipole power transmission network comprising: a first pair of converters; a second pair of converters; first and second electrical poles connecting the first pair of converters to the second pair of converters; a ground return path; and the controller of the second aspect.

It will be appreciated that the technical advantages and benefits of the first aspect apply equally to the rigid bipole power transmission network of the third aspect.

According to a fourth aspect, there is provided a computer program comprising instructions which when executed by a processor of a controller for a bipole power transmission network, cause the controller to perform the method of the first aspect.

According to a fifth aspect, there is provided a non-transitory computer-readable storage medium comprising the computer program of the fourth aspect. It will be appreciated that the technical advantages and benefits of the first aspect apply equally to the computer program of the fourth and fifth aspects.

According to a sixth aspect, there is provided a method of energising a rigid bipole power transmission network, the rigid bipole power transmission network comprising a first pair of converters connected to a second pair of converters via first and second electrical poles, and further comprising a ground return path, the method comprising: deblocking the first pair of converters and energising the electrical poles of the rigid bipole power transmission network according to the method of the first aspect, wherein the associated pair of converters is the first pair of converters; deblocking the second pair of converters and energising the electrical poles of the rigid bipole power transmission network according to the method of any one of claims first aspect, wherein the associated pair of converters is the second pair of converters.

Methods of energising a rigid bipole power transmission network tend to be improved by utilising the methods of energising electrical poles as described herein. More specifically, both the first pair of converters and second pair of converters can be energised and controlled in accordance with the methods described herein, to allow for the complete energisation of the rigid bipole power transmission network quickly and synchronously, whilst regulating ground currents.

In some embodiments, after the deblocking and balancing, the method may further comprise controlling the second pair of converters using grid forming control. Grid forming control regulates the AC voltage magnitude and frequency on the AC side of the second pair of converters. In these embodiments the electrical load connected as the AC side of the second pair of converters can be black started (whilst bus sectionalisers are closed).

In some embodiments, the rigid bipole power transmission network further comprises one or more switchgear and pre-insertion resistors 'PIR' for connecting alternating current `AC' sides of the first pair of converters to a first AC network. In these embodiments, prior to the deblocking and balancing, the method may comprise synchronously closing the one or more switchgear connected to the AC sides of the first pair of converters, to initiate passive charging of the rigid bipole power transmission network to the first AC load via the one or more PIRs. Some embodiments may further comprise waiting until the first pair of converters, first and second electrical poles, and second pair of converters, are passively charged; and then bypassing the PIRs to connect the AC sides of the first pair of converters to the first AC network. The switchgear referred to herein may comprise main circuit breakers (MCBs). The PIRs referred to herein may be bypassed by closing a bypass switch. During the initial passive energisation, the bypass switch will remain open to ensure passive charging occurs via the PIRs.

It will be appreciated that particular features of different aspects share the technical effects and benefits of corresponding features of other aspects of the invention. More specifically, the controller, power transmission network, computer program, non-transitory computer-readable medium, share the technical effects and benefits of the methods described herein.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### Brief description of the drawings

Embodiments of the invention will now be described by way of example only and with reference to the accompanying drawings, in which:
Figure 1 shows generically, an example of a power transmission network;
Figure 2 shows an example of a controller;
Figure 3 shows an example schematic for a rigid bipole power transmission network;
Figure 4 shows an example of application and low-level converter control for a pair of converters in a rigid bipole power transmission network;
Figure 5 shows an example of converter reference voltage generation using a trimming signal;
Figure 6 shows an example of trimming signal generation;
Figure 7 shows a further example of trimming signal generation;
Figure 8 shows an example of a method of energizing electrical poles of a rigid bipole power transmission network; and
Figure 9 shows an example of a method of energizing a rigid bipole power transmission network.

### Detailed description

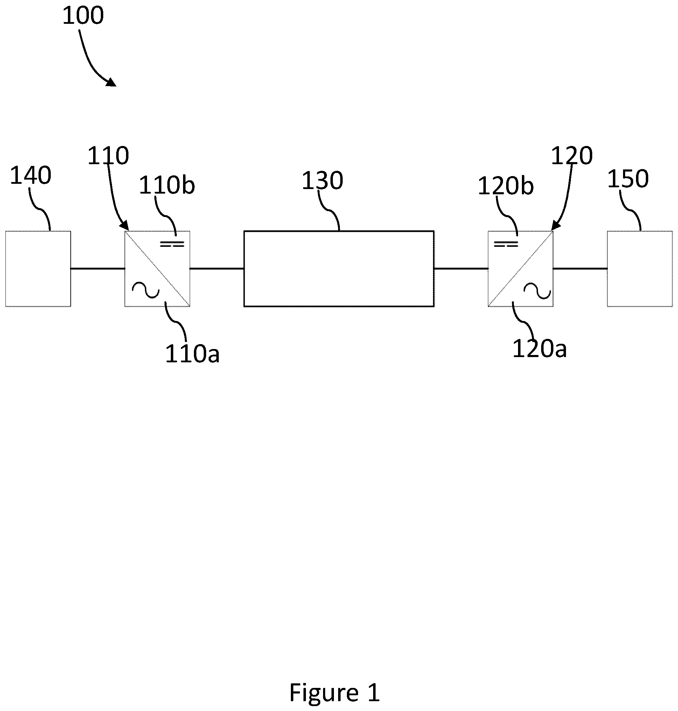

Figure 1 illustrates generically, an example of a power transmission network 100. The illustration is not intended to be limited to representing a particular power transmission scheme, such as a monopole or bipole HVDC transmission network, but is moreover provided as a generic example illustrating principles of operation of a power transmission network that are useful for understanding the invention. In this manner, the power transmission network 100 may represent, generically, a monopole or bipole scheme, or may represent a multiterminal power transmission scheme, for instance. Hence whilst specific features in the illustration are shown connected to each other with a specific number of connections, it will be understood that this is not intended to be limiting either, but moreover to illustrate a generic connection between features/components. Related, is that relative dimensions or distances between components perceived in the illustration are also not intended to be limiting.

The power transmission network 100 illustrates a first power conversion means 110 (also known as a converter station) and a second power conversion means 120. The power conversion means 110, 120, convert AC power to DC power (and vice versa), acting essentially as a rectifier (when converting AC power to DC power for transmission) and an inverter (when receiving DC power and converting to AC power). The power conversion means 110, 120, may each comprise a single converter in the case of a monopole system, or two converters in the case of a bipole system. The power conversion means 110, 120, may represent a plurality of converter stations arranged as a multi-terminal power transmission system. Generically, the first power conversion means 110 comprises a first AC side 110a and a first DC side 110b. Generically, the second power conversion means 120 comprises a second AC side 120a and a second DC side 120b.

The first power conversion means 110 is connected to a first AC network 140. The first AC network 140 is connected to the first AC side 110a of the first power conversion means 110.

The second power conversion means 120 is connected to a second AC network 150. The second AC network 150 is connected to the second AC side 120a of the second power conversion means 120. The first AC network 140 and/or second AC network 150 may be electrical power transmission systems comprising power generation apparatus, transmission apparatus, distribution apparatus, and electrical loads. The first AC network 140 and/or second AC network 150 may comprise a renewable power generation network such as a wind-power generation network, solar-power generation network, bio-power generation network. The first AC network 140 or second AC network 150 may be a consumer network. By way of non-limiting example, the first AC network 140 may be a power generation network, with second AC network 150 being a consumer network, for instance. In the case of a bipole scheme, the two converters of the first power conversion means 110 may be connected to two different AC networks. Similarly, in the case of a bipole scheme, the two converters of the second power conversion means 120 may be connected to two different AC networks.

Also shown is a power transmission medium 130 interconnecting the first power conversion means 110 and the second power conversion means 120. The power transmission medium 130 is connected between the first DC side 110b of first power conversion means 110 and the second DC side 120b of the second power conversion means 120. The power transmission medium 130 may comprise electrical cables and other electrical components interconnecting the first and second power conversion means 110, 120. For instance, the power transmission medium 130 may comprise a conductor providing a first electrical pole; and/or a conductor providing a second electrical pole. A neutral arrangement may also be provided interconnecting the first and second power conversion means 110, 120. The power transmission medium 130 provides the medium through which DC power is transmitted between the power conversion means 110, 120.

The operation of the power transmission system 100 can be generically described as follows. The first AC power generation network 140 generates AC power that is provided to first power conversion means 110 at the first AC side 110a. The first power conversion means 110 converts the received AC power to a DC power for transmission to second power conversion means 120. The DC power is transmitted from the first DC side 110b over the power transmission medium 130 to the second DC side 120b of second power conversion means 120. The second power conversion means 120 converts the received DC power back to AC power. The AC power is then provided from the second AC side 120a to the second AC network 150 for consumption, for instance. In particular examples, the power conversion means 110 and 120 may be geographically remote. For instance, the first power conversion means 110 may reside with an off-shore wind farm and the second power conversion means 120 may reside on-shore.

It will be appreciated that various other electrical components may be located at any particular location or with any particular feature/component in the example 100. These may include switches, transformers, resistors, reactors, surge arrestors, harmonic filters and other components well known in the art.

It will be appreciated that converters or power conversion means may comprise a number of different technologies such as voltage sourced converters (for instance using insulated gate bipolar transistor (IGBT) valves). Such converters may generally be considered to use `power electronics'. Power electronic converters may comprise multi-level voltage sourced converters, for instance.

It will be appreciated that cables used as power transmission mediums may comprise the following non-limiting examples of crosslinked polyethylene (XLPE) and/or mass impregnated (MI) insulation cables. Such cables may comprise a conductor (such as copper or Aluminium) surrounding by a layer of insulation. Dimensions of cables and their associated layers may be varied according to the specific application (and in particular, operational voltage requirements). Cables may further comprise strengthening or `armouring' in applications such as subsea installation. Cables may further comprise sheaths/screens that are earthed at one or more locations.

Moreover, it will be understood that the power transmission network 100 may be used with three-phase power systems.

The power transmission network 100 may be operated using methods such as synchronous grid forming (SGFM) wherein either or both of the power converters 110, 120 behave as three-phase, positive-phase sequence AC voltage sources behind an impedance, which operate at a frequency synchronous with over SGFM sources connected to the power transmission network 100.

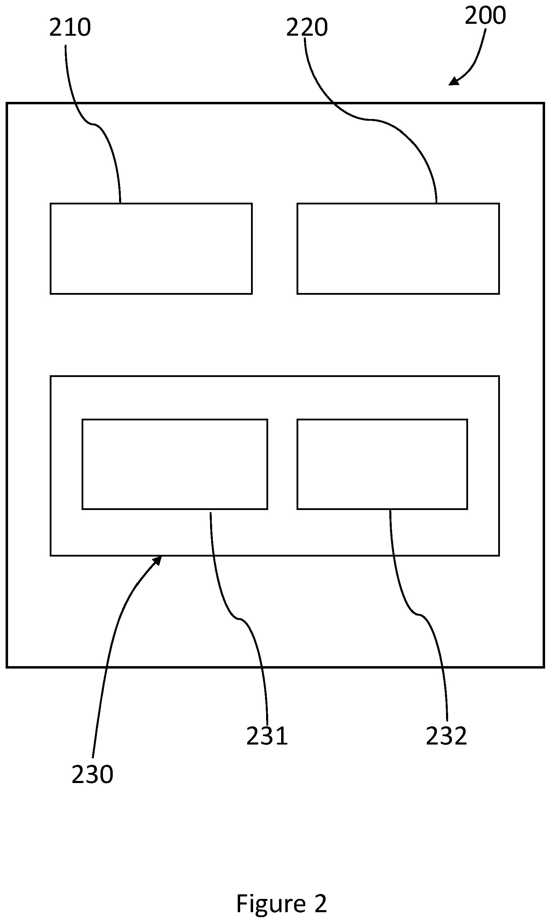

The power transmission network 100 may further comprise a controller for controlling the operation of components of the power transmission network 100. For instance, a controller may be provided for executing the methods described herein. Such a controller may control the power conversion means 110, 120, for instance. Such a controller may be referred to as a controller means or control means. The controller may be the controller 200 of Figure 2.

Figure 2 illustrates an embodiment of a controller 200 as may be used in implementing the invention described herein.

The controller 200 comprises a memory 210 and at least one processor 220. The memory 210 comprises computer-readable instructions, which when executed by the at least one processor 220, cause the controller 200 to perform the method/s described herein.

The controller 200 is shown as comprising a transceiver arrangement 230 which may comprise a separate transmitter 231 and receiver 232. The transceiver arrangement 230 may be used to operatively communicate with other components or features of embodiments described herein either directly or via a further interface such as a network interface. The transceiver arrangement 230 may for instance send and receive control signals using transmitter 231 and receiver 232. The control signals may contain or define electrical control parameters such as reference currents or reference voltages.

The at least one processor 220 is capable of executing computer-readable instructions and/or performing logical operations. The at least one processor 220 may be a microcontroller, microprocessor, central processing unit (CPU), field programmable gate array (FPGA) or similar programmable controller. The controller may further comprise a user input device and/or output device. The processor 220 is communicatively coupled to the memory 210 and may in certain embodiments be coupled to the transceiver 230.

The memory 210 may be a computer readable storage medium. For instance, the memory 210 may include a non-volatile computer storage medium. For example, the memory 210 may include a hard disk drive, flash memory etc.

Whilst not shown, the controller 200 may additionally include a user input device interface and/or a user output device interface, which may allow for visual, audible or haptic inputs/outputs. Examples include interfaces to electronic displays, touchscreens, keyboards, mice, speakers and microphones.

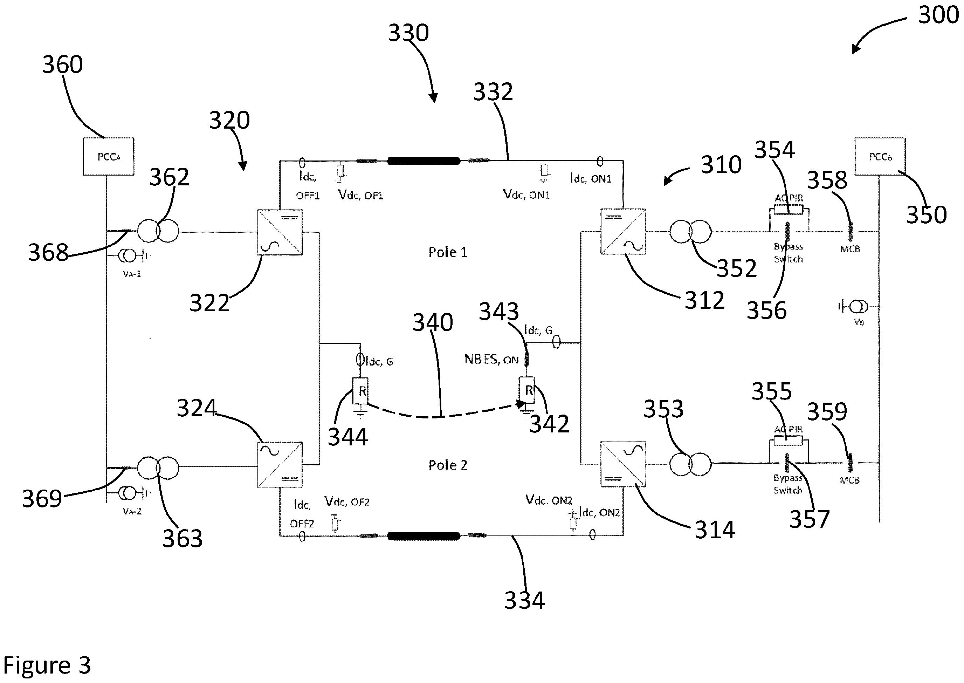

Figure 3 shows an example schematic for a rigid bipole power transmission network 300.

The rigid bipole power transmission network 300 comprises a first pair of converters 310. The first pair of converters 310 can be considered to represent an on-shore converter station. The first pair of converters 310 comprise AC:DC converters 312, 314.

The rigid bipole power transmission network 300 also comprises a second pair of converters 320. The second pair of converters 320 can be considered to represent an offshore converter station. The second pair of converters 320 comprise AC:DC converters 322, 324.

The rigid bipole power transmission network 300 further comprises electrical poles 330. The electrical poles 330 comprise first 332 and second 334 electrical poles connecting the first pair of converters 310 to the second pair of converters 320. More specifically, the first electrical pole 332 connects DC sides of converters 312 and 322. The second electrical pole 334 connects DC sides of converters 314 and 324.

At the onshore side of the first electrical pole 332 a DC electrical current and DC electrical voltage are indicated as I_{dc, ON1} and V_{dc, ON1}, respectively. At the offshore side of the first electrical pole 332 a DC electrical current and DC electrical voltage are indicated as I_{dc, OFF1} and V_{dc, OF1} respectively. At the onshore side of the second electrical pole 334 a DC electrical current and DC electrical voltage are indicated as I_{dc, ON2} and V_{dc, ON2}, respectively. At the offshore side of the second electrical pole 334 a DC electrical current and DC electrical voltage are indicated as I_{dc, OFF2} and V_{dc, OF2} respectively.

A ground return path 340 is also present in the rigid bipole power transmission network 300. The ground return path 340 includes the grounding of first pair of converters 310 via grounding resistor 342 and NBES switch 343. The ground return path 340 also includes the grounding of the second pair of converters 320 via grounding resistor 344. A DC electrical current flowing to ground is indicated as I_{dc, G}.

As already mentioned, the first pair of converters 310 are AC:DC converters. The AC sides of the first pair of converters 310 can be considered as being connectable to an AC load at a point of common connection 350. As shown, the point of common connection 350 is connectable to the AC side of the individual converters 312, 314 via respective transformers 352, 353, AC pre-insertion resistors 354, 355 having associated bypass switches 356, 357 and main circuit breakers (MCB) 358, 359.

As already mentioned, the second pair of converters 320 are AC:DC converters. The AC sides of the second pair of converters 320 can be considered as being connectable to an AC load at a point of common connection 360. As shown, the point of common connection 360 is connectable to the AC side of the individual converters 322, 324 via respective transformers 362, 363, and switchgear 368, 369.

In the rigid bipole power transmission network 300 either one or both of the converter stations (represented by converter pairs 310, 320) are grounded. In such a scheme 300, it is required to reduce the ground current I_{dc, G} in the ground return path 340 to be close to zero. This requires a current balancing between the two poles 332, 334.

An energization sequence for a bipole scheme includes a number of steps as will now be briefly introduced.

Referring to Figure 3, an initial step comprises the closing of the onshore MCBs 358, 359 simultaneously. The bypass switches 356, 357 for the pre-insertion resistors 354, 355 are kept open to allow passive energization via the pre-insertion resistors 354, 355 of the onshore transformers 352, 353, converters 312, 314, poles 332, 334 and offshore converters 322, 324.

A further step comprises closing the bypass switches 356, 357.

A further step comprises deblocking the two onshore converters 312, 314 to enable controlled charging of the onshore converters 312, 314.

A further step comprises deblocking the two offshore converters 322, 324 to enable controlled charging of the offshore converters 322, 324.

A further step comprises synchronizing the ramping up of the AC voltage on the offshore AC buses (i.e., at the point of common connection 360) to black start the offshore AC load/grid.

When a rigid bipole power HVDC scheme (such as power transmission network 300) is energized, the converters in each pair of converters 310, 320 should be energized in a coordinated manner. Even running a simultaneous energization for both electrical poles 332, 334 may still result in a difference in energy levels between the converters in each pair 310, 320, owing to a number of reasons as hereinbefore discussed. Notwithstanding this, if the energization is not coordinated an energy imbalance between the converters in each pair 310, 320 will cause an imbalance in electrical current between the poles 332, 334. This imbalance current will consequently flow through the ground return path 340. This is undesirable because excess ground currents can induce unwanted effects, such as EMI and induced currents in other conductors/components, equipment damage or fires, and accelerated corrosion in some components, conductors, or structures in the ground path.

The disclosure herein tends to provide for a solution that allows for coordinated and faster energization of electrical poles in a bipole power transmission network whilst ensuring ground currents are maintained below a threshold or ideally close to zero.

The disclosure herein provides a control logic for the power converters in a pair of power converters 310, 320. More specifically the control logic modifies the 'energy' of the converters of the pair of converters 310, 320, to achieve sychronised energization of both poles 332, 334. The control logic may be triggered when a pair of converters 310, 320 is deblocked during energization of the rigid bipole power transmission network 300. The control logic may modify the charging and switching of converter valve capacitors to vary a DC voltage output from the converters of a pair of converters 310, 320 to respective DC points of connection to electrical poles 332, 334. The control logic can regulate the DC voltages to ensure that current flowing through the ground return path 340 is maintained below a predetermined threshold or, ideally, close to zero. The disclosure herein proceeds with a discussion of exemplary control logic.

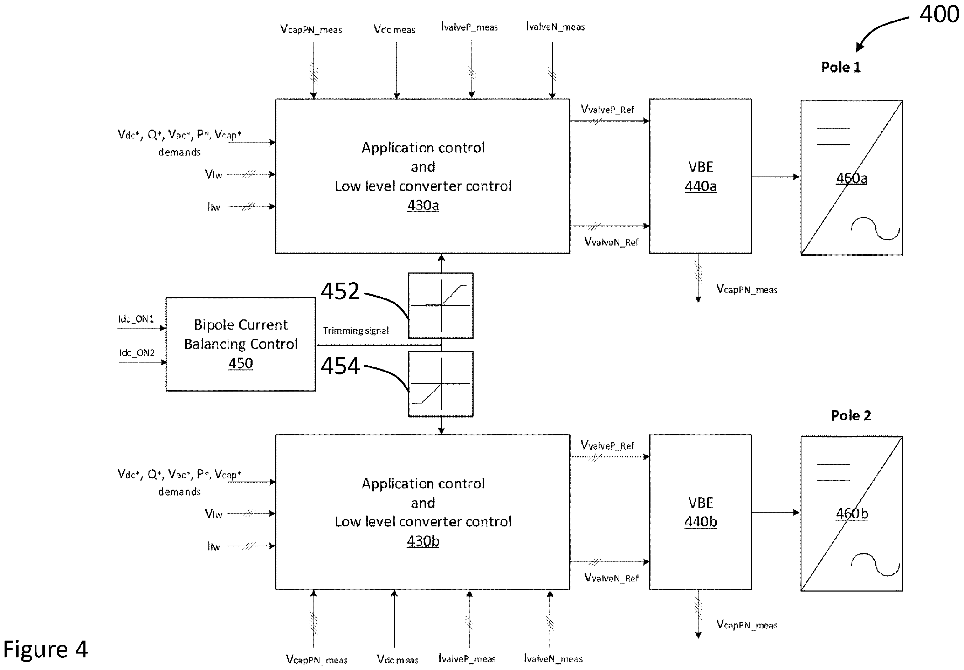

Figure 4 shows an example 400 of application and low-level converter control for a pair of converters in a rigid bipole power transmission network.

The example 400 shows the control logic for a first converter 460a of a first electrical pole. The first electrical pole may comprise the pole 332 of Figure 3, and hence the first converter 460a may be the converter 312 or 322. The control logic for the first converter 460a will now be described.

The control logic for first converter 460a comprises an application and low-level converter control unit 430a for valve current control and valve reference voltage generation. The control unit 430a receives a plurality of measured and reference values along with the trimming signal as hereinbefore described. The control unit 430a generates valve voltage reference values based on the received measured values, reference values and the trimming signal. The control unit 430a implements various controls such as Vdc, Pdc, Q and Vac controls, converter controls, energy management controls, valve current control and valve voltage reference generation. More specifically, inputs to the control unit 430a include V_{dcmeas}, I_{valveP_meas}, I_{valveN_meas} (measured DC voltage, measured positive and negative arm currents), V_{IW} and I_{IW} (measured three phase line winding side AC voltages, measured three phase line winding side AC currents). Further inputs include V_{capPN_meas} (measured valve capacitor voltages), and demands for Vdc (DC voltage), Q (reactive power), Vac (AC voltage), P (power) and Vcap (capacitor voltage). The control unit 430a uses the inputs to generate reference voltages V_{valveP_ref}, V_{valveN_ref}. The V_{valveP_ref}, V_{valveN_ref} are output to valve base electronics module (VBE) 440a.

The VBE module 440a controls converter 460a for a first electrical pole. The VBE 440a is also shown as outputting the average capacitor voltages for the six valves V_{capPN_meas}.

The example 400 also shows the control logic for a second converter 460b of a second electric pole. The second electrical pole may comprise the pole 334 of Figure 3, and hence the second converter 460b may be the second converter 314 or 324. The control logic for the second converter 460b is the same as for the first converter 460a and comprises the modules 430b, 440b that are analogous to the operation of the modules 430a, 440a. The operation of modules 430, 440 would be familiar to the person skilled in the art as illustrating conventional MMC control logic and current/voltage control logic.

The example 400 is shown to include additional control logic in the form of bipole current balancing control module 450. This additional control logic operates according to aspects of the methods described herein. The module 450 receives as input, values for the parameters I_{dc_ON1} and I_{dc_ON2} (or equivalently 1_{dc_OFF1} and I_{dc_OFF2}). These parameters represent the first and second electrical pole currents as illustrated in the example 300 of Figure 3. As can be seen in the example 400, the module 450 uses the inputs to generate a trimming signal. There may be other methods of generating the trimming signal, for example, based on the direct current measurement through the neutral arrangement and/or ground return path. The trimming signal is shown as being provided to the control units/modules 430a, 430b through a limiter block 452, 454. The limiter block 452, 452b may be used to limit/ clamp the trimming signal between pre-defined upper and lower bounds (for e.g., 0 and 1 or 0 and -1). In the control units 430a, 430b the trimming signal is used for modifying a pre-calculated current demand value, the current demand value being determined based on the conventional MMC energy balancing control logic and constant current/voltage control logic.

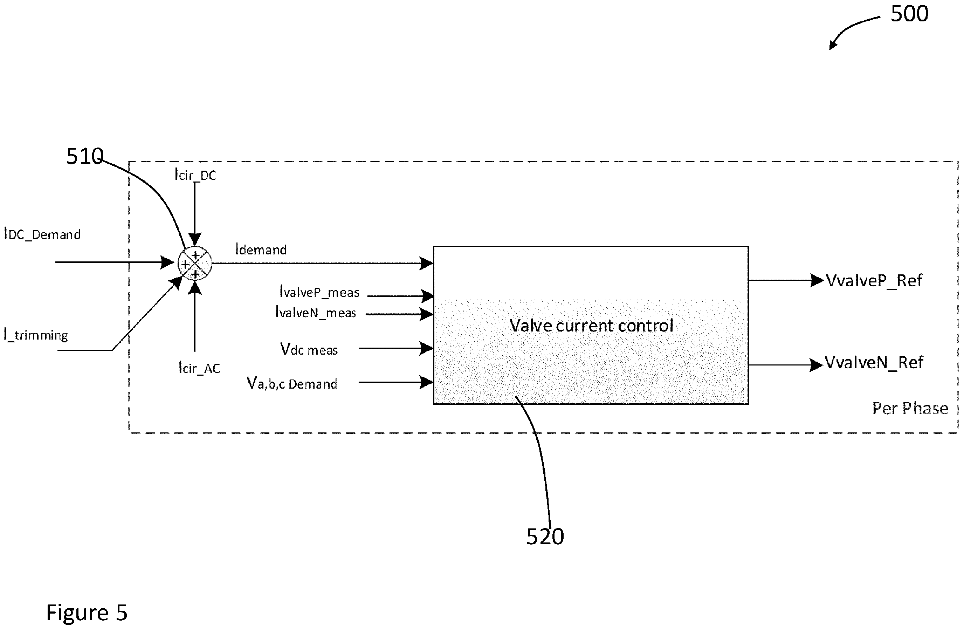

Figure 5 shows an example 500 of the utilization of a trimming signal with MMC valve current control and converter reference voltage generation. The example 500 may be used for each phase of a multi-phase power transmission network.

In the example 500, a first junction 510 is shown. The first junction 510 combines the inputs I_{cir_DC}, I_{DC_Demand}, I_{cir-AC} and I_{_trimming}. In this example, the I_{_trimming} is the trimming signal.

The first junction 510 outputs a current demand 'Idemand' to the valve current control unit 520. The valve current control unit 520 also receives the inputs I_{valveP_meas} and I_{valveN_meas}, Vdcmeas (measured DC voltage) and V_{a,b,c demand}.

The parameter V_{a,b,c demand} is a demand voltage for a given phase

The control unit 520 determines the valve reference voltages V_{valveP_Ref} and V_{valveN_Ref} shown in Figure 4.

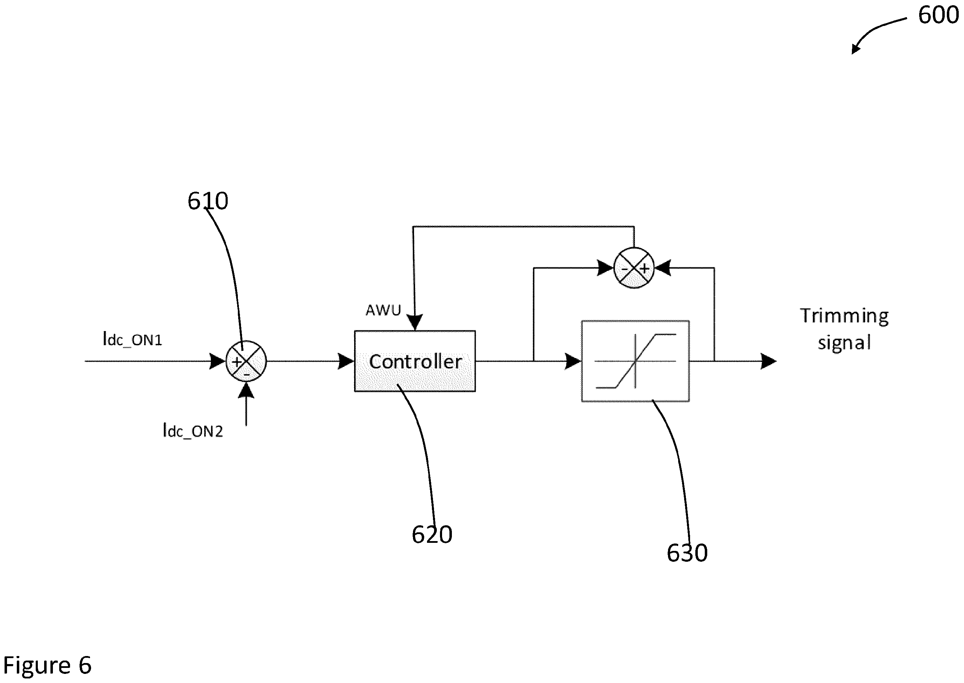

Figure 6 shows an example 600 of trimming signal generation. A first junction 610 receives as inputs the electrical currents I_{dc_ON1} and I_{dc_ON2}. These are the electrical currents on the first and second electrical poles 332 and 334 of Figure 3 at the onshore side, as illustrated. The first junction 610 determines a difference between the electrical currents I_{dc_ON1} and I_{dc_ON2}. The difference determined at the first junction 610 is output to a controller 620.

The controller 620 passes the determined difference through a limiting function 630 to generate a trimming signal. A feedback signal AWU is provided to the controller 620 based on the trimming signal before and after limiting.

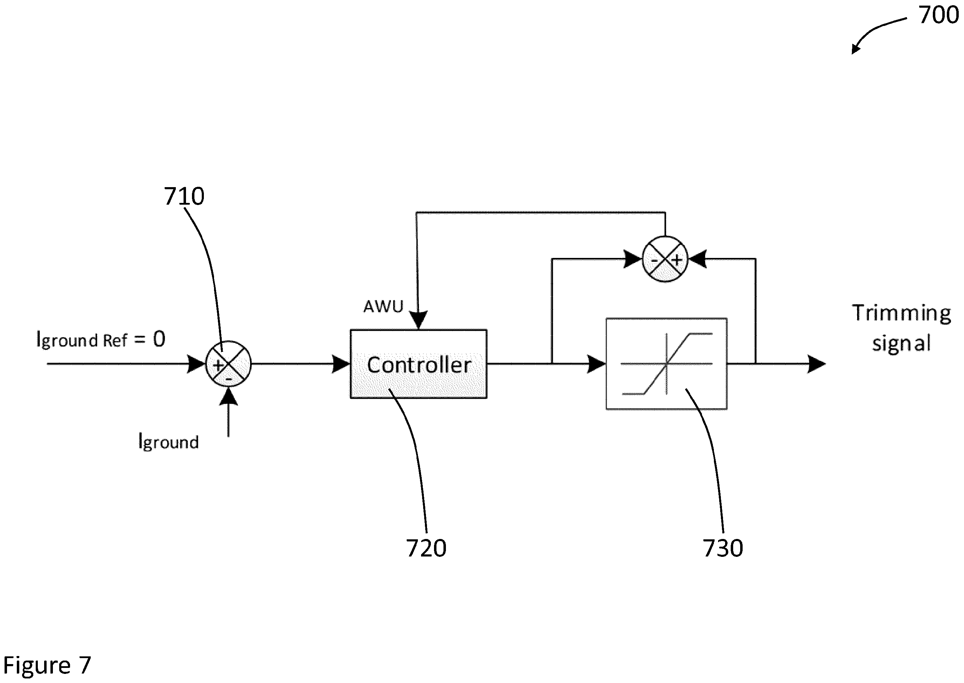

Figure 7 shows a further example 700 of trimming signal generation. A first junction 710 receives as inputs the electrical current I_{ground} and a reference value for I_{ground}. In this instance the reference value is zero. The electrical current I_{ground} corresponds to I_{dc, G} in Figure 3 (i.e., the electrical current flowing through the ground return path via resistors 342/ 344. The first junction 710 determines a difference between the reference value and the electrical current I_{ground}. This difference is provided to controller 720. The controller 720 passes the determined difference through limiting function 730 to generate a trimming signal. A feedback signal AWU is provided to the controller 720 based on the trimming signal before and after limiting.

As is apparent from the disclosure herein, the valve voltage reference generation modules 430a and 430b of Figure 4 are modified to generate valve voltage references for the converters 460a, 460b based on modified current demand values (as shown in Figure 5). The valve voltage references are used for controlling the charging/energization of the converters in accordance with the trimming signal generated according to Figures 6 or 7. This ensures that the current flowing through ground is maintained below a predefined limit or is kept close to zero.

With reference to the previously described Figures 3, in an exemplary embodiment, if, at any point in the energization process, the difference between the currents I_{dc,ON1} and I_{dc,ON2} is positive, a positive trimming signal will be generated. This would be indicative of an imbalance in the energy levels of the converters 312 and 314, for instance, of the first electrical pole 332 and the second electrical pole 334. Specifically, this would indicate that the charge/energy level of a first converter 312 of the pair of converters 310 is more than the charge/energy level of a second converter 314 of the pair 310. The trimming signal for the first converter 312 of the first electrical pole 332 may be clamped to a predefined limit value when passed through the limiter block (i.e., 452 or 454 of Figure 4). This positive signal will trigger the valve voltage reference generation module 430a or 430b to modify valve voltage references such that the rate of rise of energy in the first converter 312 is reduced. This will delay the charging of the first converter 312 with respect to that of the second converter 314 until the charge level of converter 312 becomes equal to the charge level of converter 314.

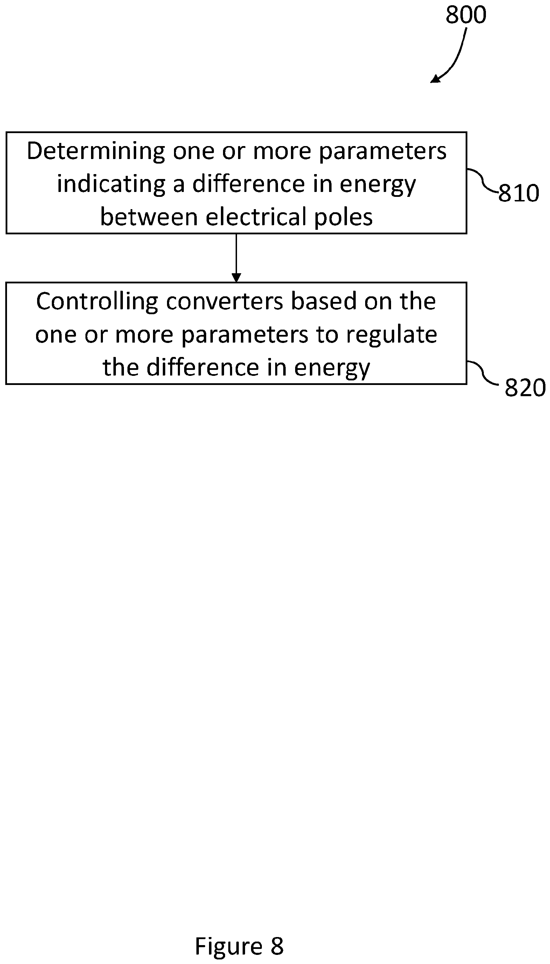

Figure 8 shows an example of a method 800 of energizing electrical poles of a rigid bipole power transmission network. The rigid bipole power transmission network may be the network 300 of Figure 3 comprising a first pair of converters 310 connected to a second pair of converters 320 via first and second electrical poles 332, 334, and further comprising a ground return path 340.

A first step 810 comprises determining one or more parameters (i.e., I_{dc ON1}, I_{dc ON2}, I_{dc OFF1}, I_{dc OFF2}, I_{dc, G}) associated with either of the first or second pair of converters 310, 320, wherein the one or more parameters indicate a difference in energy between the first and second electrical poles 332, 334.

A further step 820 comprises controlling, based on the one or more parameters, at least one converter 312, 314, 322, 324 of the associated first or second pair of converters 310, 320 to regulate the difference in energy between the first and second electrical poles 332, 334 such that a ground current (i.e., I_{dc, G}) flowing in the ground return path 340 is below a predetermined threshold value.

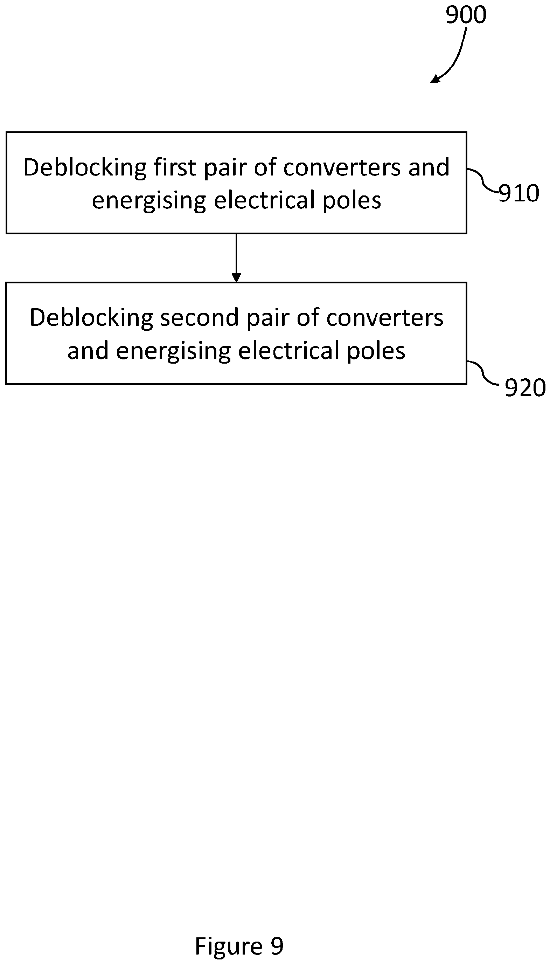

Figure 9 shows an example of a method 900 of energizing a rigid bipole power transmission network. The rigid bipole power transmission network may be the network 300 of Figure 3 comprising a first pair of converters 310 connected to a second pair of converters 320 via first and second electrical poles 332, 334, and further comprising a ground return path 340.

A first step 910 comprises deblocking the first pair of converters 310 and energising the electrical poles 332, 334 of the rigid bipole power transmission network 300 according to the method 800 of the first aspect, wherein the associated pair of converters is the first pair of converters 310.

A further step 920 comprises deblocking the second pair of converters 320 and energising the electrical poles 332, 334 of the rigid bipole power transmission network 300 according to the method 800 of the first aspect, wherein the associated pair of converters is the second pair of converters 320.

It will be appreciated that the steps of method 900 can be utilized within the broader energization process for a rigid bipole polar transmission network. By way of example and again utilizing the example 300 of Figure 3 for illustrative purposes, the following additional procedural steps may be followed.

The MCBs 358, 359 may be closed to energize the two onshore transformers 352, 353, the two onshore converters 312, 314, the first (positive) and second (negative) electrical poles 332, 334, and the two offshore converters 322, 324. This may be performed via the AC PIRs 354 and 357 (i.e., the bypass switches 356, 357 are kept open).

It may be necessary to wait until all valves of the converters 312, 314, 322, 324 are passively charged and also for cables of the electrical poles 332, 334 to charge.

The bypass switches 356, 357 may then be closed after the capacitor voltages of the valves for the onshore converters 312, 314 are passively charged. At the same time, the onshore converters 312, 314 are deblocked and energy control of both converters 312, 314 is enabled.

The control logic as herein described and exemplified in the example 800 of Figure 8 is used to regulate current through the ground return 340 (i.e., to regulate I_{dc G}) substantially to zero, through the addition of a trimming signal to the control of both onshore converters 312, 314 where it will act as a differential energy control between the two onshore converters 312, 314.

Also, at the same time the offshore converters 322, 324 for the first (positive) and second (negative) electrical poles 332, 334 are deblocked, and energy control is enabled for both offshore converters 322, 324.

The control logic as herein described and exemplified in the example 800 of Figure 8 is used to regulate current through the ground return 340 substantially to zero, through the addition of a trimming signal to the control of both offshore converters 322, 324 where it will act as a differential energy control between the two offshore converters 322, 324. This may occur while MCBs of the separated busbars are open.

The offshore converters 322, 324 may then be controlled using grid forming control to regulate the AC voltage magnitude and frequency to black start the offshore load whilst the switchgear (bus sectionalisers) 368, 369 are closed.

Reference throughout this specification to an example of a particular method or apparatus, or similar language, means that a particular feature, structure, or characteristic described in connection with that example is included in at least one implementation of the method and apparatus described herein. The terms "including", "comprising", "having", and variations thereof, mean "including but not limited to", unless expressly specified otherwise. An enumerated listing of items does not imply that any or all of the items are mutually exclusive, unless expressly specified otherwise. The terms "a", "an", and "the" also refer to "one or more", unless expressly specified otherwise.

As used herein, a list with a conjunction of "and/or" includes any single item in the list or a combination of items in the list. For example, a list of A, B and/or C includes only A, only B, only C, a combination of A and B, a combination of B and C, a combination of A and C or a combination of A, B and C. As used herein, a list using the terminology "one or more of" includes any single item in the list or a combination of items in the list. For example, one or more of A, B and C includes only A, only B, only C, a combination of A and B, a combination of B and C, a combination of A and C or a combination of A, B and C. As used herein, a list using the terminology "one of" includes one, and only one, of any single item in the list. For example, "one of A, B and C" includes only A, only B or only C and excludes combinations of A, B and C. As used herein, "a member selected from the group consisting of A, B, and C" includes one and only one of A, B, or C, and excludes combinations of A, B, and C." As used herein, "a member selected from the group consisting of A, B, and C and combinations thereof" includes only A, only B, only C, a combination of A and B, a combination of B and C, a combination of A and C or a combination of A, B and C.

Aspects of the disclosed methods and apparatuses are described with reference to schematic flowchart diagrams and/or schematic block diagrams of methods, apparatuses, systems, and program products. It will be understood that each block of the schematic flowchart diagrams and/or schematic block diagrams, and combinations of blocks in the schematic flowchart diagrams and/or schematic block diagrams, can be implemented by code. This code may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams.

The schematic flowchart diagrams and/or schematic block diagrams in the Figures illustrate the architecture, functionality, and operation of possible implementations of apparatuses, systems, methods, and program products. In this regard, each block in the schematic flowchart diagrams and/or schematic block diagrams may represent a module, segment, or portion of code, which includes one or more executable instructions of the code for implementing the specified logical function(s).

It will be appreciated that numerical values recited herein are merely intended to help illustrate the working of the invention and may vary depending on the requirements of a given power transmission network, component thereof, or power transmission application.

The listing or discussion of apparently prior-published documents or apparently prior-published information in this specification should not necessarily be taken as an acknowledgement that the document or information is part of the state of the art or is common general knowledge.

Preferences and options for a given aspect, feature or parameter of the invention should, unless the context indicates otherwise, be regarded as having been disclosed in combination with any and all preferences and options for all other aspects, features and parameters of the invention.

The disclosure herein also provides a method to balance energy between the converters of two poles during the energisation of a rigid bipole HVDC system, the rigid bipole HVDC system comprising a first sending-end converter and a first receiving-end converter connected via a first pole, a second sending-end converter and a second receiving-end converter connected via a second pole, and a ground return path, the method comprising: measuring at least one first parameter (i.e., current to the ground, or difference between DC pole currents), associated with a pair of the sending-end converters or a pair of the receiving-end converters; determining a trimming signal based on the measured first parameter; and generating trigger signals for valves of the converter pair based on the trimming signal in order to modify the energisation rate of the converters in the converter pair until the DC voltage outputs of the converters become equal.

## Claims

1. A method of energising electrical poles of a rigid bipole power transmission network, the rigid bipole power transmission network comprising a first pair of converters connected to a second pair of converters via first and second electrical poles, and further comprising a ground return path, the method comprising:
determining one or more parameters associated with either of the first or second pair of converters, wherein the one or more parameters indicate a difference in energy between the first and second electrical poles; and
controlling, based on the one or more parameters, at least one converter of the associated first or second pair of converters to regulate the difference in energy between the first and second electrical poles such that a ground current flowing in the ground return path is below a predetermined threshold value.

2. The method of claim 1, wherein the step of controlling, based on the one or more parameters, the at least one converter, comprises:
modifying, based on the one or more parameters, a DC voltage output by the at least one converter to the respective electrical pole.

3. The method of claim 2, wherein the step of modifying, based on the one or more parameters, the DC voltage output by the at least one converter, comprises:
determining a trimming signal, based on the one or more parameters; and
generating, based at least in part on the trimming signal, reference voltages for valves of the at least one converter of the associated first or second pair of converters.

4. The method of claim 3, wherein the step of generating, based at least in part on the trimming signal, reference voltages for valves of the at least one converter, comprises:
modifying a demand value for electrical current of the at least one converter, based on the trimming signal, to generate a modified demand value for electrical current; and
generating the reference voltages based on the modified demand values for electrical current.

5. The method of any one of claims 3-4, further comprising:
limiting the trimming signal to a predetermined limit value.

6. The method of any preceding claim, wherein the one or more parameters comprises one or more parameters selected from the list of parameters consisting of:
the ground current;
a first current of the first electrical pole;
a second current of the second electrical pole; and
a difference between the first current and the second current.

7. The method of any preceding claim, wherein the predetermined threshold value is less than or equal to 5 Amperes, more preferably substantially zero.

8. The method of any preceding claim, wherein the converters of the first pair and second pair of converters comprise voltage-source converters `VSC', more preferably multilevel modular converters 'MMC'.

9. The method of any preceding claim, wherein the first pair of converters are on-shore converters and the second pair of converters are off-shore converters.

10. The method of any preceding claim, wherein the bipole power transmission network is a high voltage direct current 'HVDC' bipole power transmission network.

11. A controller for energising electrical poles of a rigid bipole power transmission network, the rigid bipole power transmission network comprising a first pair of converters connected to a second pair of converters via first and second electrical poles, and further comprising a ground return path, the controller comprising:
a memory; and
at least one processor;
wherein the memory comprises computer-readable instructions which when executed by the at least one processor cause the controller to:
measure one or more parameters associated with either of the first or second pair of converters, wherein the one or more parameters indicate a difference in energy between the first and second electrical poles; and
control, based on the one or more parameters, at least one converter of the associated first or second pair of converters to regulate the difference in energy between the first and second electrical poles such that a ground current flowing to the ground return path is below a predetermined threshold value.

12. A rigid bipole power transmission network comprising:
a first pair of converters;
a second pair of converters;
first and second electrical poles connecting the first pair of converters to the second pair of converters;
a ground return path;
and the controller of claim 11.

13. A method of energising a rigid bipole power transmission network, the rigid bipole power transmission network comprising a first pair of converters connected to a second pair of converters via first and second electrical poles, and further comprising a ground return path, the method comprising:
deblocking the first pair of converters and energising the electrical poles of the rigid bipole power transmission network according to the method of any one of claims 1-10, wherein the associated pair of converters is the first pair of converters;
deblocking the second pair of converters and energising the electrical poles of the rigid bipole power transmission network according to the method of any one of claims 1-10, wherein the associated pair of converters is the second pair of converters.
